# EUROPEAN PATENT SPECIFICATION

(11) **EP 4 403 445 B1**
(45) Date of publication and mention of the grant of the patent: **12.08.2026**
(21) Application number: 21957396.1
(22) Date of filing: 15.09.2021
(51) Int. Cl.: B62J 6/26, B62J 6/045, B62J 6/04, B62J 6/056, B62J 6/165, B62J 6/015, B60Q 1/44, B60Q 1/50

(54) **SIGNALLING DEVICE FOR BICYCLES**
SIGNALVORRICHTUNG FÜR FAHRRÄDER
DISPOSITIF DE SIGNALISATION POUR BICYCLETTES

(43) Date of publication of application: 24.07.2024
(73) Proprietor: Draisler Ventures, S.L., 28002 Madrid (ES)
(72) Inventor: SANZ ESPINOSA, Jesús, 28036 MADRID (ES); PASTOR GONZALEZ DEL VAL, José Manuel, 28036 MADRID (ES)
(74) Representative: Urizar Anasagasti, Jesus Maria
(86) International application number: PCT/ES2021/070662
(87) International publication number: WO 2023/041812

(56) References cited:
- EP-A1- 2 868 556
- EP-A1- 2 868 556
- WO-A1-2018/157923
- CN-U- 203 005 622
- KR-A- 20110 136 278
- US-A- 5 617 303
- US-A1- 2010 283 590

## Description

### Technical field

The present invention falls within the technical field of optical signalling and lighting devices for bicycles.

More specifically, in devices with rear lights, turn signals, brake lights and signalling lights for the safety distance that other vehicles must keep from the cyclist.

### State of the art

In the current state of the art, a wide variety of lighting devices for signalling vehicles and especially for use on bicycles are known. The functions of these devices vary, with the fundamental ones being: A warning light, usually consisting of a flashing red light with a variety of effects, a brake light, turn signals and laser projections around the bicycle.

The warning light is usually based on the flashing of a normally red light with a variety of effects. These effects do not have a technical criterion and also increase the complexity of using the device. In many cases, the light produced has a low intensity and is not clearly perceived at a certain distance.

Brake lights are known to be manually operated by pressing a button, which makes them dangerous when releasing a hand to perform braking. There are also automatic brake lights, either with accelerometers and different braking detection algorithms, or wired to the brake controls, which complicates installation.

Finally, laser projections tend to be unsuitable either due to their geometry or due to the distance from the bicycle to those that are projected. Circular lenses are usually used to generate the line effect, this solution making it difficult to assemble the equipment since it requires correct orientation of the lens.

For example, document WO2018157923 (A1) describes an integral lighting and safety device for bicycles that comprises a plurality of light sources to indicate the position of a bicycle and/or a change in its direction, and a laser module further comprising a laser source housed in a crosswise housing, and a single line lens having a grooved side, housed in the lower window and positioned with respect to the laser source in such a way that, when an emitted light from the laser source reaches the line lens, a beam having a circumference arc shape, with an arc between 240° and 60°, is projected from the line lens with the aim of delimiting a safety space around the rear of the bicycle.

The aforementioned document, like most known devices, is small in size, making it extremely difficult to distinguish which side of the turn signal is active until one is very close to the cyclist. There are some models where this separation is greater, but if the device is removed, its size is bulky to carry around.

Document EP2868556A1 discloses a signalling device for a bicycle according to the preamble of claim 1.

Therefore, the need arises for a lighting and signalling device that ensures visibility of the cyclist at a distance that allows the driver to react without danger, that activates the brake light without user intervention when speed is reduced, that marks a safety zone for the cyclist in accordance with the rules of traffic regulations, that can be placed on and removed from the vehicle, and is easy to transport.

Furthermore, the control unit must be used without taking one's hands off the handlebar, it may be installed on both sides for right- and left-handed use, and it must not interfere with the use of other elements such as brake levers or shift levers.

### Description of the invention

To achieve the proposed objectives mentioned in the previous section, the invention proposes a signalling device for bicycles, formed by a lighting unit and a remote control unit designed to overcome the aforementioned drawbacks, and having the features of claim 1. Preferred embodiments of the invention are provided in the dependent claims.

The lighting unit has an anchoring area for anchoring to a support placed on the vehicle, which enables it to be installed and removed in a simple and reliable way. The charging connector is arranged in this anchoring area so that once installed it is protected from the weather.

The lighting unit, towards the rear, consists of several LEDs that flash at a fixed frequency close to 1Hz that human vision perceives quickly. They also provide a high light intensity so that they are visible more than 500 metres away. Internally, there is an accelerometer that steadily activates the rear LEDs at maximum intensity, indicating that the bicycle is braking. To achieve this, the algorithm eliminates the effects of gravity produced by ramps and descents, as well as induced vibrations.

Internally and on both sides, the lighting unit has laser emitters that project lines onto the road at a safe distance as a reference for vehicles. These lines pass through the transparent material that this unit is made of. The laser diode emits a point that therefore has no orientation, and it is mounted on a support that incorporates a lens in its geometry, which simplifies assembly since the support is a single piece with mounting that orients the line.

This lighting unit, also located internally and on both sides, has LED diodes that emit two blinking light beams, which pass through the transparent body of the unit and are projected at the end of the corresponding side arm of the unit. These arms are arranged so that at least one of them is foldable, so that once one is folded over the other their size is essentially reduced by half. Both the shape, length and reflective parts of these arms can be modified without affecting the internal portion of the unit, so that a wide variety of models for said arms may be available. Preferably, when the arms are opened, there is locking by bending an area of the arm which requires a certain level of effort for them to change position.

This lighting unit has a central body, which includes the aforementioned electronics and signalling systems: laser lines, turn signals and signalling and brake lights, enclosed therein and isolated from the weather, avoids the use of displays or extra transparent parts, and in the case of the turn signals, eliminates wiring and connections, which reduces costs, simplifies the folding of the arms and allows said arms to adopt a length that allows the separation between the two turn signals at the distance established for other similar vehicles, for example, a motorcycle.

The control for said lighting unit is fixed to the handlebar of the bicycle and its arrangement is such that it allows access to the buttons without taking one's hand off the handlebar. To achieve this, the control has on one of its sides a support in the form of a narrow flange that can be inserted between the different elements on the handlebar (grip, lever, gear, etc.). This arrangement leaves most of the control cantilevered, being able to be oriented in both directions to keep the buttons always close to the grip. Furthermore, the fixing flange leaves the control at a certain height from the handlebar, allowing the flanges of other components (brake, gear, etc.) to be below it. The flange allows the control to be rotated to find the most comfortable orientation, to have a better view of the control and not hide displays such as that of the gear position. By using a function, the operation can be reversed so that it can be placed on both sides of the handlebar and in any orientation.

This control communicates wirelessly with the lighting unit, allowing it to indicate a right or left-hand turn. The turn signal turns off automatically, avoiding having to press the control again. A short or long press can be made so that the duration of the turn signal is different.

One of the main objectives of the present invention is to provide a device that ensures the visibility of the cyclist at a distance that allows the driver to react without danger, that activates the brake light without user intervention when speed is reduced, and that marks a safety zone for the cyclist in accordance with the rules of traffic regulations.

Another objective of the present invention is to provide a device that can be easily placed on and removed from the vehicle and that can be folded for easy transport.

Another objective of this invention is to provide a device of this type that is affordable to implement and maintain and that retains its effectiveness over time.

Other objectives of the invention will be disclosed in the following detailed description of an exemplary embodiment which has the purpose of making the invention completely known without limiting same.

### Description of the drawings

As a complement to the description provided herein, and for the purpose of helping to make the features of the invention more readily understandable, the present specification is accompanied by a set of drawings which, by way of illustration and not limitation, represent the following:

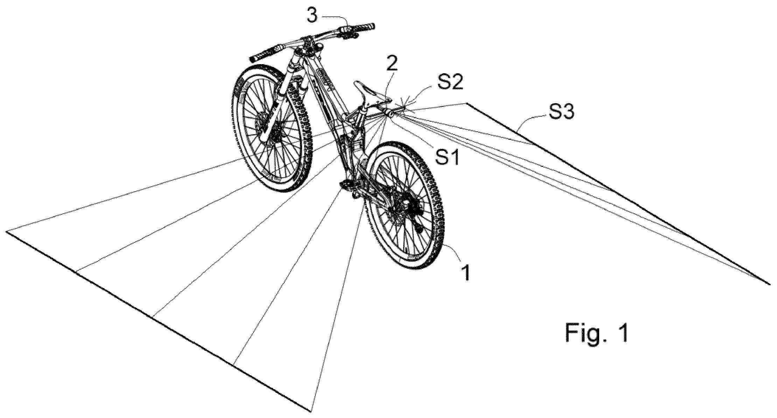

Figure 1 shows a view of a bicycle in which the brake light (S1), turn signal (S2) and safety area delimitation signal (S3) have been represented.
Figures 2 show the lighting unit (2) in the following views:
   - Figure 2a, side elevation.
   - Figure 2b, top plan.
   - Figure 2c, rear elevation.
   - Figure 2d, cross section through a horizontal plane.
   - Figure 2e, cross section through a vertical plane, with the lens that projects the lines (S3) on both sides of the bicycle (1) being mounted on the support of the laser.
   - Figure 2f, an inner view of the body (22) showing the window (24) in which a lens that projects the lines (S3) on both sides of the bicycle (1) is formed.
   - Figure 2g, rear elevation in a position of use.
   - Figure 2h, rear elevation with the arms (23) folded.
Figures 3 show the control unit (3) in the following views:
   - Figure 3a, front elevation.
   - Figure 3b, top plan.
   - Figure 3c, side elevation.

### Embodiment of the invention

As shown in the referenced figures, the invention relates to a signalling device for bicycles, which comprises:
- A lighting unit (2) provided with fixing and support means (21) on the vehicle, which includes several lighting systems:
   ∘ (S1) several LEDs that flash towards the rear signalling the position of the bicycle, or that turn on steadily when the bicycle is braking.
   ∘ (S2) LED diodes that emit two blinking light beams towards the side and rear of the vehicle.
   ∘ (S3) laser emitters (30) that project lines onto the road at a safe distance as a reference for other vehicles, towards both sides of the bicycle.
- A control unit (3), fixed to the handlebar of the bicycle and wirelessly connected to the lighting unit (2), by means of which the cyclist signals their intention to turn left or right by using two buttons (31, 32) located thereon.

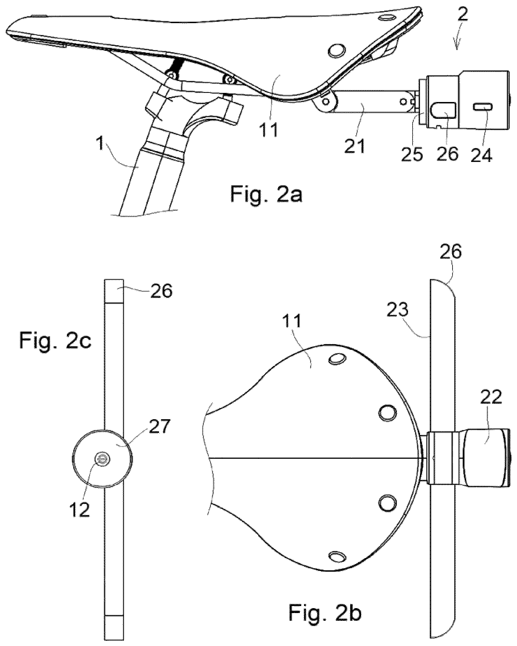

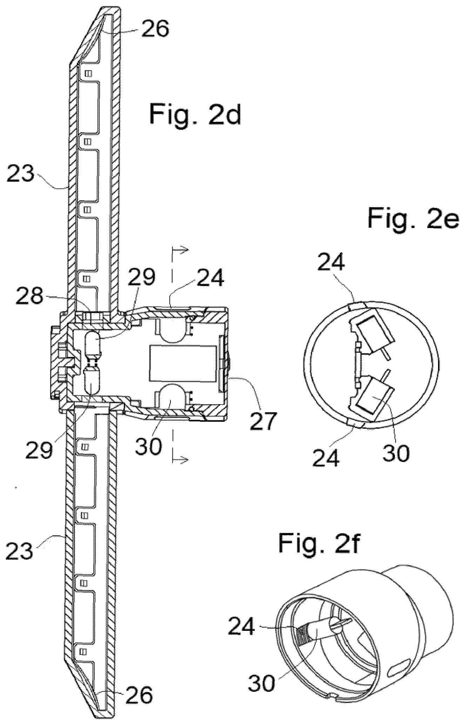

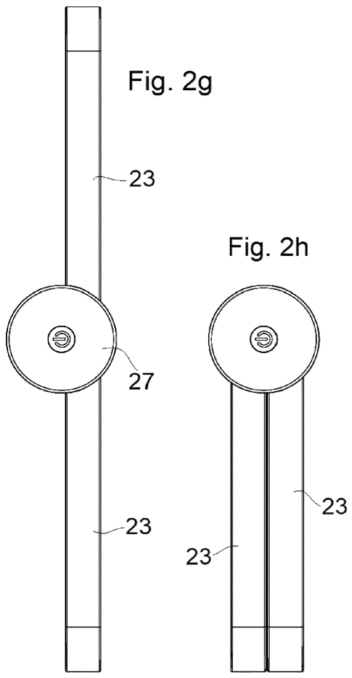

The lighting unit (2), represented in Figures 2, is made up of a central body (22), which includes the electronics and signalling systems enclosed therein and isolated from the weather, from which two horizontal arms (23) emerge, diametrically opposed, arranged so that at least one of them is foldable on the other, leaving the central body (22) on one side. At the free end, both have the corresponding turn signals, which are separated from each other by at least 18 cm, which is the minimum regulatory distance at which these lights must be placed on a motorcycle so that there are no doubts about their signalling to other vehicles.

As already indicated, a special feature of this lighting unit is that, on the one hand, there is a great length from end to end, measured along the arms (23), and yet all the lighting systems indicated previously are enclosed in the central body (22) in a sealed manner. To achieve this objective, it is necessary for this central body (22) to be transparent at least in several areas:
- In two side windows (24) through which the beam of two laser diodes (30) that project two lines (S3) onto the ground exits, on both sides of the bicycle (1). These laser diodes (30) point to two lenses that can be mounted or formed on the support of said laser diodes (Figure 2e), or on the central body (22) (Figure 2f).
- In the rear area (27), which is illuminated by LEDs that flash to signal the position of the bicycle (1) or that turn on steadily while the bicycle is braking. These lines pass through the transparent material that this unit is made of.
- And in two side areas (28), located in correspondence with the interior of the respective arms (23), which transmit the light from two blinking LED diodes (29) to the ends of said arms. In a preferential embodiment, two reflectors (26) help to project the blinking light towards the sides and the rear area of the lighting unit (2).

The central body (22) of the lighting unit (2) further comprises a battery that powers the internal electronics, which is charged through a USB-type connection (25) or similar, and an on/off switch (12), which is preferably located in the centre of the tail light (27).

The electronics that control the signalling systems included in the central body (22) of the lighting unit (2) provides for turning on the turn signals for a predefined period of time after the cyclist activates the corresponding button (31, 32), so that they do not have to activate the button twice. On the other hand, the turning on of the LEDs that flash in the rear (27) signalling the presence of the bicycle becomes steady when an accelerometer included in said lighting unit (2) detects that the bicycle is braking. In a preferential embodiment, the algorithm based on which the brake light is turned on provides for eliminating the effects of gravity produced by ramps and descents, as well as due to induced vibrations.

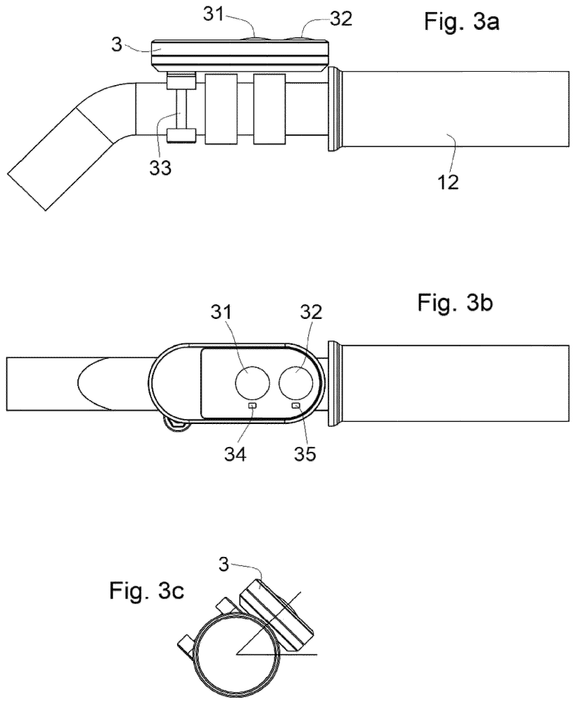

The control (3), represented in Figures 3, comprises a housing that includes electronics having wireless communication means with the lighting unit (2), through which the intention to turn right or left is indicated by means of two buttons (31, 32). Optionally, the operation of the turn signals of the lighting unit (2) is also signalled on two lights (34, 35).

This control (3) is fastened on the handlebar (12) of the bicycle by means of a clamp (33) that includes a ball joint enabling the control (3) to be rotated based on the needs of the cyclist; as shown in Figure 3c, the control is generally placed turned towards the cyclist and at a certain angle backwards so that they can easily see which button they have to press at least while they are getting used to using the device. This clamp (33) is preferably arranged at one of the ends of said control, leaving the main portion of the same cantilevered and raised slightly above the handlebar in order to leave space for other bicycle gear or brake flanges located on the same area of the handlebar. Furthermore, this clamp (33) can be fixed at either end of said control.

The control (3) can be mounted either on the left side or on the right side of the handlebar, whereby the turn signal turned on by each button can be exchanged by means of an action on the buttons (31, 32).

Having described the nature of the invention, as well as a preferred exemplary embodiment, it is obvious that the invention is industrially applicable in the indicated sector.

The scope of the invention is defined by the appended claims.

## Claims

1. A signalling device for a bicycle, comprising:
- a lighting unit (2) connectable to a support on the bicycle, which includes:
∘ several LEDs that are configured, when the signalling device is mounted on the bicycle, to flash towards the rear of the lighting unit to signal the position of the bicycle or to be turned on steadily when the bicycle is braking;
∘ on both sides of the lighting unit, a laser emitter that is configured to project a line onto the road at a safe distance as a reference for other vehicles when the signalling device is mounted on the bicycle; and
∘ on both sides of the lighting unit, a LED diode that is configured to emit a blinking light beam;
- a control unit (3), fixable to the handlebar (12) of the bicycle and wirelessly connected to the lighting unit (2),
this device being **characterised in that** the lighting unit comprises:
a) a central body (22), which includes the electronics and signalling systems enclosed therein and isolated from the weather, which is transparent at least in:
- two side windows (24) through which the beams of two laser diodes (30) forming said laser emitters, which when passing through a respective lens project two lines (S3) onto the ground, exit on both sides of the bicycle (1) when the signalling device is mounted on the bicycle;
- a rear area (27), which is illuminated by the LEDs that are configured to signal the position of the bicycle (1) or that the bicycle is braking when the signalling device is mounted on the bicycle; and
- two side areas (28) in correspondence with the interior of two arms (23) that transmit the light from the two blinking LED diodes (29) to their free ends where said light is projected towards the sides and/or the rear area of the lighting unit (2) to form turn signals;
b) said two arms (23), which are horizontal and diametrically opposed relative to the central body, and arranged so that at least one of them is foldable on the other one and both are hollow and shaped to internally transmit the light from the two blinking LED diodes (29) that provide the light of the turn signals and project it from their free ends towards the sides and/or the rear area of the lighting unit (2), said turn signals formed at the free ends of the said arms being at least 18 cm apart from each other when said at least one arm is not folded.

2. The device, according to claim 1, **characterised in that** the control unit (3) comprises:
- a housing that includes electronics having wireless communication means with the lighting unit (2), through which the intention to turn right or left of a cyclist is indicated;
- at least two buttons (31, 32) respectively for both turn signals;
- a clamp (33) for fastening on the handlebar (12) of the bicycle, which includes a ball joint enabling the control unit (3) to be rotated based on the needs of the cyclist.

3. The device, according to claim 1, **characterised in that** the central body (22) of the lighting unit (2) further comprises:
- fixing means (21) for fixing the same on the bicycle;
- a connection (25) for charging an internal battery that powers the lighting unit (2);
- an on/off switch (12).

4. The device, according to claim 2, **characterised in that** the signalling systems included in the central body (22) of the lighting unit (2) provide for turning on the turn signals for a predefined period of time after the cyclist activates the corresponding button (31, 32).

5. The device, according to claim 4, **characterised in that** the turn signal turned on by each button can be exchanged by means of an action on the buttons (31, 32).

6. The device, according to claim 1, **characterised in that** the signalling systems included in the central body (22) of the lighting unit (2) provide for turning on the LEDs that flash in the rear area (27) of the central body (22) signalling the position of the bicycle, steadily when an accelerometer included in said lighting unit (2) detects that the bicycle is braking.

7. The device, according to claim 1, **characterised in that** the lenses that project the lines (S3) onto the ground on both sides of the bicycle (1) are mounted or formed on the support of said laser diodes, or on the central body (22) of the lighting unit.

8. The device, according to claim 2, **characterised in that** the clamp (33) for fastening the control unit (3) is arranged at one of the ends of said control unit (3), leaving the main portion of the same cantilevered and raised slightly above the handlebar in order to leave space for other components located on the same.

9. The device, according to claim 8, **characterised in that** the clamp (33) for fastening the control unit (3) can be fixed at either end of said control unit (3).

## Patentansprüche

1. Signalvorrichtung für ein Fahrrad, umfassend:
- eine Beleuchtungseinheit (2), die mit einer Halterung am Fahrrad verbunden werden kann, die Folgendes enthält:
∘ mehrere LEDs, die dazu konfiguriert sind, dass sie, wenn die Signalvorrichtung am Fahrrad montiert ist, zur Rückseite der Beleuchtungseinheit hin blinken, um die Position des Fahrrads zu signalisieren, oder dauerhaft leuchten, wenn das Fahrrad bremst;
∘ auf beiden Seiten der Beleuchtungseinheit einen Laseremitter, der dazu konfiguriert ist, in sicherem Abstand eine Linie auf die Straße als Referenz für andere Fahrzeuge zu projizieren, wenn die Signalvorrichtung am Fahrrad montiert ist; und
∘ auf beiden Seiten der Beleuchtungseinheit eine LED-Diode, die dazu konfiguriert ist, einen blinkenden Lichtstrahl zu emittieren;
- eine Steuereinheit (3), die am Lenker (12) des Fahrrads fixierbar ist und drahtlos mit der Beleuchtungseinheit (2) verbunden ist,
wobei diese Vorrichtung **dadurch gekennzeichnet ist, dass** die Beleuchtungseinheit Folgendes umfasst:
a) einen zentralen Körper (22), der die darin untergebrachte und wettergeschützte Elektronik sowie die Signalsysteme enthält und der mindestens an folgenden Stellen transparent ist:
- zwei Seitenfenstern (24), durch die die Strahlen von zwei Laserdioden (30), die die Laseremitter bilden und beim Durchgang durch eine jeweilige Linse Linien (S3) auf den Boden projizieren, auf beiden Seiten des Fahrrads (1) austreten, wenn die Signalvorrichtung am Fahrrad montiert ist;
- einem hinteren Bereich (27), der von den LEDs beleuchtet wird, die dazu konfiguriert sind, die Position des Fahrrads (1) oder das Bremsen des Fahrrads zu signalisieren, wenn die Signalvorrichtung am Fahrrad montiert ist; und
- zwei Seitenbereichen (28), die mit dem Inneren zweier Arme (23) übereinstimmen, welche das Licht der beiden blinkenden LED-Dioden (29) zu ihren freien Enden leiten, wo das Licht zur Seite und/oder zum hinteren Bereich der Beleuchtungseinheit (2) projiziert wird, um Fahrtrichtungsanzeiger zu bilden;
b) die beiden Arme (23), die horizontal verlaufen und dem zentralen Körper diametral gegenüberliegen und so angeordnet sind, dass mindestens einer von ihnen auf den anderen klappbar ist und beide hohl sind und so geformt sind, dass sie das Licht der beiden blinkenden LED-Dioden (29), die das Licht der Fahrtrichtungsanzeiger bereitstellen, im Inneren weiterleiten und es von ihren freien Enden in Richtung der Seiten und/oder des hinteren Bereichs der Beleuchtungseinheit (2) projizieren, wobei die an den freien Enden der Arme gebildeten Fahrtrichtungsanzeiger mindestens 18 cm voneinander entfernt sind, wenn der mindestens eine Arm nicht eingeklappt ist.

2. Vorrichtung nach Anspruch 1, **dadurch gekennzeichnet, dass** die Steuereinheit (3)
Folgendes umfasst:
- ein Gehäuse, das eine Elektronik mit drahtlosen Kommunikationsmitteln mit der Beleuchtungseinheit (2) enthält, über die die Absicht eines Radfahrers, nach rechts oder links abzubiegen, angegeben wird;
- mindestens zwei Tasten (31, 32) jeweils für die beiden Fahrtrichtungsanzeiger;
- eine Klemme (33) zur Befestigung am Lenker (12) des Fahrrads, die ein Kugelgelenk enthält, das es ermöglicht, die Steuereinheit (3) basierend auf den Bedürfnissen des Radfahrers zu drehen.

3. Vorrichtung nach Anspruch 1, **dadurch gekennzeichnet, dass** der zentrale Körper (22) der Beleuchtungseinheit (2) ferner Folgendes umfasst:
- Fixiermittel (21) zum Fixieren derselben am Fahrrad;
- einen Anschluss (25) zum Laden einer internen Batterie, die die Beleuchtungseinheit (2) mit Strom versorgt;
- einen Ein-/Ausschalter (12).

4. Vorrichtung nach Anspruch 2, **dadurch gekennzeichnet, dass** die im zentralen Körper (22) der Beleuchtungseinheit (2) enthaltenen Signalsysteme dafür sorgen, dass die Fahrtrichtungsanzeiger für einen vordefinierten Zeitraum eingeschaltet werden, nachdem der Radfahrer die entsprechende Taste aktiviert hat (31, 32).

5. Vorrichtung nach Anspruch 4, **dadurch gekennzeichnet, dass** der durch die jeweilige Taste eingeschaltete Fahrtrichtungsanzeiger durch Betätigen der Tasten (31, 32) umgeschaltet werden kann.

6. Vorrichtung nach Anspruch 1, **dadurch gekennzeichnet, dass** die im zentralen Körper (22) der Beleuchtungseinheit (2) enthaltenen Signalsysteme dafür sorgen, dass die LEDs, die im hinteren Bereich (27) des zentralen Körpers (22) blinken und die Position des Fahrrads signalisieren, dauerhaft leuchten, wenn ein in der Beleuchtungseinheit (2) enthaltener Beschleunigungssensor erkennt, dass das Fahrrad bremst.

7. Vorrichtung nach Anspruch 1, **dadurch gekennzeichnet, dass** die Linsen, die die Linien (S3) auf beiden Seiten des Fahrrads (1) auf den Boden projizieren, an der Halterung der Laserdioden oder am zentralen Körper (22) der Beleuchtungseinheit montiert oder ausgebildet sind.

8. Vorrichtung nach Anspruch 2, **dadurch gekennzeichnet, dass** die Klemme (33) zur Befestigung der Steuereinheit (3) an einem der Enden der Steuereinheit (3) angeordnet ist, wobei der Hauptteil derselben freitragend bleibt und leicht über den Lenker angehoben ist, um Platz für andere daran stehende Komponenten zu schaffen.

9. Vorrichtung nach Anspruch 8, **dadurch gekennzeichnet, dass** die Klemme (33) zur Befestigung der Steuereinheit (3) an jedem Ende der Steuereinheit (3) fixiert werden kann.

## Revendications

1. Dispositif de signalisation pour une bicyclette, comprenant :
- une unité d'éclairage (2) pouvant être reliée à un support sur la bicyclette, qui contient :
∘ plusieurs LED qui sont configurées, lorsque le dispositif de signalisation est monté sur la bicyclette, pour émettre des éclairs vers l'arrière de l'unité d'éclairage afin de signaler la position de la bicyclette ou pour s'allumer en continu lorsque la bicyclette freine ;
∘ de part et d'autre de l'unité d'éclairage, un émetteur laser qui est configuré pour projeter une ligne sur la route à une distance de sécurité comme référence pour les autres véhicules lorsque le dispositif de signalisation est monté sur la bicyclette ; et
∘ de part et d'autre de l'unité d'éclairage, une diode LED qui est configurée pour émettre un faisceau lumineux d'émission intermittente ;
- une unité de commande (3), pouvant être fixée au guidon (12) de la bicyclette et connectée sans fil à l'unité d'éclairage (2),
ce dispositif étant **caractérisé en ce que** l'unité d'éclairage comprend :
a) un corps central (22), qui contient l'électronique et les systèmes de signalisation logés à l'intérieur de celui-ci et isolés des intempéries, lequel est transparent au moins au niveau de :
- deux fenêtres latérales (24) à travers lesquelles les faisceaux de deux diodes laser (30) formant lesdits émetteurs laser, qui, après leur passage à travers une lentille respective, projettent des lignes (S3) sur le sol, sortent de part et d'autre de la bicyclette (1) lorsque le dispositif de signalisation est monté sur la bicyclette ;
- une zone arrière (27), qui est éclairée par les LED qui sont configurées pour signaler la position de la bicyclette (1) ou le fait que la bicyclette freine lorsque le dispositif de signalisation est monté sur la bicyclette ; et
- deux zones latérales (28) en correspondance avec l'intérieur de deux bras (23) qui transmettent la lumière des deux diodes LED d'émission intermittente (29) à leurs extrémités libres où ladite lumière est projetée vers les côtés et/ou la zone arrière de l'unité d'éclairage (2) pour former des clignotants ;
b) lesdits deux bras (23), qui sont horizontaux et diamétralement opposés par rapport au corps central, et agencés de manière à ce qu'au moins l'un d'eux soit repliable sur l'autre et que les deux soient creux et façonnés pour transmettre intérieurement la lumière des deux diodes LED d'émission intermittente (29) qui fournissent la lumière des clignotants et la projettent depuis leurs extrémités libres vers les côtés et/ou la zone arrière de l'unité d'éclairage (2), lesdits clignotants formés aux extrémités libres desdits bras étant espacés d'au moins 18 cm l'un de l'autre lorsque ledit au moins un bras n'est pas replié.

2. Dispositif, selon la revendication 1, **caractérisé en ce que** l'unité de commande (3)
comprend :
- un boîtier qui contient l'électronique dotée de moyens de communication sans fil avec l'unité d'éclairage (2), par l'intermédiaire desquels l'intention d'un cycliste de tourner à droite ou à gauche est indiquée ;
- au moins deux boutons (31, 32) respectivement pour les deux clignotants ;
- un collier (33) destiné à l'assujettir au guidon (12) de la bicyclette, qui contient une articulation à rotule permettant la rotation de l'unité de commande (3) en fonction des besoins du cycliste.

3. Dispositif, selon la revendication 1, **caractérisé en ce que** le corps central (22) de l'unité d'éclairage (2) comprend en outre :
- des moyens de fixation (21) destinés à fixer celui-ci sur la bicyclette ;
- une connexion (25) destinés à charger une batterie interne qui alimente l'unité d'éclairage (2) ;
- un interrupteur marche/arrêt (12).

4. Dispositif, selon la revendication 2, **caractérisé en ce que** les systèmes de signalisation contenus dans le corps central (22) de l'unité d'éclairage (2) permettent d'allumer les clignotants pendant une durée prédéfinie après que le cycliste a actionné le bouton correspondant (31, 32).

5. Dispositif, selon la revendication 4, **caractérisé en ce que** le clignotant allumé par chaque bouton peut être échangé au moyen d'une action sur les boutons (31, 32).

6. Dispositif, selon la revendication 1, **caractérisé en ce que** les systèmes de signalisation contenus dans le corps central (22) de l'unité d'éclairage (2) permettent d'allumer les LED qui émettent des éclairs dans la zone arrière (27) du corps central (22) signalant la position de la bicyclette, de manière continue lorsqu'un accéléromètre contenu dans ladite unité d'éclairage (2) détecte que la bicyclette freine.

7. Dispositif, selon la revendication 1, **caractérisé en ce que** les lentilles qui projettent les lignes (S3) sur le sol de part et d'autre de la bicyclette (1) sont montées ou formées sur le support desdites diodes laser, ou sur le corps central (22) de l'unité d'éclairage.

8. Dispositif, selon la revendication 2, **caractérisé en ce que** le collier (33) destiné à assujettir l'unité de commande (3) est agencé à l'une des extrémités de ladite unité de commande (3), laissant la partie principale de celle-ci en porte-à-faux et légèrement surélevée au-dessus du guidon afin de laisser de la place à d'autres composants situés sur celui-ci.

9. Le dispositif, selon la revendication 8, **caractérisé en ce que** le collier (33) destiné à assujettir l'unité de commande (3) peut être fixée à l'une ou l'autre extrémité de ladite unité de commande (3).
